Europäisches Patentamt

European Patent Office

Office européen des brevets

(11) Veröffentlichungsnummer: **0 314 912 B1**

(12) # EUROPÄISCHE PATENTSCHRIFT

(45) Veröffentlichungstag der Patentschrift:
14.08.91 Patentblatt 91/33

(51) Int. Cl.⁵: **F16B 13/04, F16B 13/10**

(21) Anmeldenummer: **88115689.7**

(22) Anmeldetag: **23.09.88**

(54) **Spreizdübel für die Verankerung in hinterschnittenen Bohrlöchern.**

(30) Priorität: **05.11.87 DE 3737549**

(43) Veröffentlichungstag der Anmeldung:
**10.05.89 Patentblatt 89/19**

(45) Bekanntmachung des Hinweises auf die
Patenterteilung:
**14.08.91 Patentblatt 91/33**

(84) Benannte Vertragsstaaten:
**AT BE CH ES FR GB IT LI NL SE**

(56) Entgegenhaltungen:
**EP-A- 0 156 115**
**EP-A- 0 163 120**
**EP-A- 0 217 053**
**DE-A- 2 330 538**
**DE-U- 1 988 822**
**DE-U- 7 609 714**

(73) Patentinhaber: **fischerwerke Artur Fischer
GmbH & Co. KG
Weinhalde 14 - 18
W-7244 Waldachtal 3/Tumlingen (DE)**

(72) Erfinder: **Fischer, Artur, Prof. Dr. h.c.
Weinhalde 34
W-7244 Waldachtal 3/Tumlingen (DE)**

**Beschreibung**

Die Erfindung betrifft einen Spreizdübel für die Verankerung in hinterschnittenen Bohrlöchern gemäß der Gattung von Anspruch 1.

In konisch erweiterte Bohrlöcher können metallische Spreizdübel nahezu spreizdruckfrei verankert werden, wobei aufgrund der starken Aufspreizung des Spreizelements sehr hohe Haltewerte erreicht werden. Bekannte Spreizdübel besitzen einen Spreizkonus, auf den eine Spreizhülse durch Verwendung eines geeigneten Einschlagwerkzeugs aufschlagbar ist. Der Dübelschaft ragt mit einem Gewindeelement oder dgl. aus dem Bohrloch heraus und kann dort mittels einer Schraubenmutter mit einem zu befestigenden Gegenstand verspannt werden.

Die bekannten Spreizdübel, die mittels Schlagmontage im Bohrloch mit konischer Hinterschneidung einsetzbar sind, erfordern spezielle Einschlagwerkzeuge, die jeweils an den Durchmesser des verwendeten Spreizdübels angepaßt sind.

Aus der DE-U-7609714 ist ebenfalls ein Spreizdübel für die Verankerung in hinterschnittenen Bohrlöchern bekannt. Dieser Spreizdübel weist einen mit dem Dübelschaft verbundenen Spreizkörper auf, an dem Spreizsegmente aufspreizbar sind. Diese Spreizsegmente sind in Richtung Spreizkörper abstehend am Dübelschaft angeformt. Zur Verankerung wird der mit einem Gewindeschaft verlängerte Spreizkörper mittels einer sich an der Mauerwerksaußenfläche abstützenden Mutter und einem an dem dem Spreizkörper abgewandten Befestigungsteil ansetzbaren Drehwerkzeug in die Spreizsegmente eingezogen. Dabei wird der Spreizkörper vom Bohrlochgrund weg in Richtung Bohrlochmündung bewegt. Für die Verankerung des bekannten Spreizdübels sind demzufolge die Handhabung von zwei Werkzeugen, nämlich zum einen für die Mutter und zum anderen für den Spreizkörper, erforderlich. Ferner erfolgt die Verankerung in einem Abstand zum Bohrlochgrund, was ein tieferes, für die Verankerung nicht voll genutztes Bohrloch erfordert.

Der Erfindung liegt die Aufgabe zugrunde, einen Spreizdübel für die Verankerung in hinterschnittenen Bohrlöchern zu schaffen, der im Aufbau einfach ist und eine einfache Montage erlaubt.

Die Lösung dieser Aufgabe wird bei einem Spreizdübel der eingangs genannten Gattung durch die im Anspruch 1 angegebenen Merkmale erreicht. Über die Gewindeverbindung zwischen Dübelschaft und Spreizkörper werden die Spreizsegmente beim Drehen des Dübelschaftes auf den sich am Bohrlochgrund abstützenden Spreizkörper aufgeschoben. Damit bewegt sich der Dübelschaft in Richtung Bohrlochgrund, während der Spreizkörper in seiner ursprünglichen Lage verbleibt. Gegen Verdrehen ist der Spreizkörper durch das an seiner Stirnseite angeordnete Sicherungselement gesichert, das sich durch den vom Dübelschaft ausgehenden Anpreßdruck in den Bohrlochgrund eingräbt. Das Aufdrehen des Dübelschaftes auf das Gewinde des Spreizkörpers erfolgt zweckmäßigerweise mittels eines Schlagschraubers oder eines sonstigen Drehwerkzeuges. Da über das Sicherungselement eine automatische Drehsicherung für den Spreizkörper erfolgt, ergibt sich eine sehr einfache Handhabung bei der Verankerung des erfingungsgemäßen Spreizdübels. Die axiale Bewegung des Dübelschaftes in Richtung Bohrlochgrund kann entweder dazu benutzt werden, mit dem Dübelschaft den zu befestigenden Gegenstand direkt zu verspannen oder einen bündigen Abschluß des Dübelschaftes mit der Wandaußenfläche zu erreichen.

Der Spreizkörper ist vorzugsweise als Gewindebolzen mit Spreizkonus ausgebildet, wobei der Gewindeabschnitt durch den von den Spreizsegmenten gebildeten Ringraum koaxial in den Dübelschaft eingeschraubt ist. Das zu diesem Zweck am Dübelschaft vorgesehene Innengewinde besitzt eine ausreichende Tiefe, damit der Gewindebolzen weit genug einschraubbar ist, um eine maximale Aufspreizung der Spreizsegmente zu erhalten.

Damit der Spreizvorgang erleichtert wird, sieht eine Weiterbildung der Erfindung vor, daß am Übergang zwischen Spreizsegmenten und Dübelschaft eine außen verlaufende Ringnut vorgesehen ist.

Ein besonders gutes Gleitverhalten zwischen Spreizsegmenten und Spreizkörper wird dadurch erhalten, daß in eine an der Innenfläche der Spreizsegmente vorgesehene Ausnehmung oder Ringnut ein Gleitring eingesetzt ist. Der Gleitring kann aus gute Gleiteigenschaften aufweisendem Metall oder Kunststoff hergestellt sein.

Am Befestigungsteil des Dübelschaftes kann ein Innen- oder Außengewinde vorgesehen sein, welches sowohl als Mittel zum Ansetzen eines Drehwerkzeugs als auch zum Festschrauben einer Befestigungsschraube dient. Als Mittel zum Ansetzen eines Drehwerkzeugs kann jedoch auch ein Innen- oder Außensechskant oder ein Schlitz Verwendung finden.

Die Erfindung wird nachfolgend anhand der Zeichnung näher erläutert.

Es zeigen :

Figur 1    einen erfindinngsgemäßen Spreizdübel mit Innengewinde am Befestigungsteil,
Figur 2    die Stirnseite des Spreizkörpers von dem in Figur 1 dargestellten Spreizdübel und

Figur 3   ein zweites Ausführungsbeispiel eines Spreizdübels mit einem Gleitring im Bereich der Spreizsegmente.

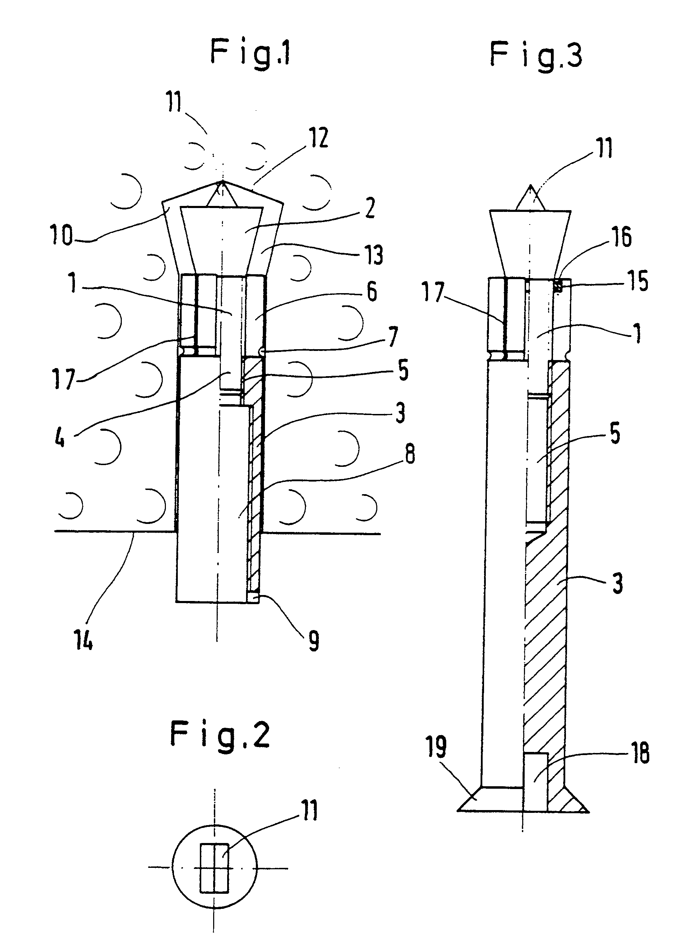

Der in Figur 1 dargestellte Spreizdübel besteht aus einem Gewindebolzen 1 mit Spreizkonus 2 und dem Dübelschaft 3. Der Gewindebolzen 1 ist mit seinem Gewindeabschnitt 4 in ein Innengewinde 5 eingeschraubt.

An seinem dem Spreizkonus 2 zugewandten Ende des Dübelschaftes 3 besitzt dieser angeformte Spreizsegmente 6, die einen hülsenförmigen Spreizbereich bilden. Am Übergang zwischen den Spreizsegmenten 6 und dem Dübelschaft 3 ist eine äußere Ringnut 7 vorgesehen, die das Aufbiegen der Spreizsegmente 6 beim Spreizvorgang erleichtert.

Am anderen Ende des Dübelschaftes 3 besitzt dieser eine Innenbohrung 8 und einen Querschlitz 9, der zum Ansetzen eines Schraubendrehers geeignet ist.

Befindet sich der Befestigungsdübel in der in Figur 1 dargestellten Position innerhalb eines Bohrlochs 10, so wird am aus dem Bohrloch 10 herausragenden Ende des Dübelschafts 3 ein Drehwerkzeug, beispielsweise ein Schraubendreher, aufgesetzt und gedreht. Dabei drückt ein an der Stirnseite des Spreizkonus 2 abstehendes Sicherungselement 11 gegen den Bohrlochgrund 12. Dadurch wird verhindert, daß sich der Gewindebolzen 1 zusammen mit dem Dübelschaft 3 mitdreht. Durch Drehung am Dübelschaft 3 schraubt sich dieser in Richtung Spreizkonus 2, wobei die Spreizsegmente 6 in der Hinterschneidung 13 aufspreizen.

Nach dem Festsetzen des Spreizdübels kann ein zu befestigender Gegenstand durch Einsetzen einer Schraube in das Innengewinde 8 an der Wand 14 befestigt werden.

In der stirnseitigen Draufsicht gemäß Figur 2 ist erkennbar, daß das Sicherungselement 11 ein keilförmiger Steg ist. Als Sicherungselemente könnten auch verteilt angeordnete Spitzen oder dergleichen dienen.

In Figur 3 ist ein weiteres Ausführungsbeispiel dargestellt, welches an der Innenfläche der Spreizsegmente 6 eine Aussparung 15 besitzt, in die ein Gleitring 16 vorzugsweise aus Kunststoff eingesetzt ist. Auch hier sind die Segmente 6 am Schaft 3 angeformt und durch Längsschlitze 7 voneinander getrennt.

Der Befestigungsteil des Dübelschafts 3 besitzt einen Innensechskant 18, in den zum Drehen des Dübelschafts 3 ein hier nicht dargestelltes Drehwerkzeug einsetzbar ist. Ein Flansch 19 dient als eigentliches Befestigungselement, mit dem eine Latte, ein Rahmen oder dergleichen gegen eine Wand verspannt werden kann.

Nach dem Aufspreizen der Spreizsegmente 6 sind die erfindungsgemäßen Spreizdübel sicher im Bohrloch 10 gehalten. Eine am Spreizdübel angreifende Zugkraft wird über die Spreizsegmente 6 und dem Gewindebolzen 1 bzw. über den Gewindeabschnitt 4 übertragen. Es ist somit auch im Bereich des Gewindeabschnitts 4 der gesamte Querschnitt des Spreizdübels zur Kraftübertragung wirksam. Dadurch können äußerst hohe Belastungswerte erreicht werden.

**Patentansprüche**

1. Spreizdübel für die Verankerung in hinterschnittenen Bohrlöchern mit einem mit dem Dübelschaft verbundenen Spreizkörper, an dem Spreizsegmente aufspreizbar sind, wobei die Spreizsegmente am Dübelschaft angeformt sind und in Richtung Spreizkörper abstehen und am vom Spreizkörper abgewandten Befestigungsteil Mittel zum Ansetzen eines Drehwerkzeugs angeordnet sind, **dadurch gekennzeichnet,** daß an der Stirnseite des sich am Bohrlochgrund abstützenden Spreizkörpers (2) als Drehsicherung wenigstens ein Sicherungselement (11) absteht, und daß der Spreizkörper über ein Gewinde mit dem Dübelschaft verbunden ist.

2. Spreizdübel nach Anspruch 1, **dadurch gekennzeichnet,** daß der Spreizkörper ein mit einem Spreizkonus (2) versehener Gewindebolzen (1) ist, dessen Gewindeabschnitt (4) durch den von den Spreizsegmenten (6) gebildeten Ringraum in ein Innengewinde (5) am Dübelschaft (3) eingreift.

3. Spreizdübel nach einem der Ansprüche 1 oder 2, **dadurch gekennzeichnet,** daß am Übergang zwischen Spreizsegmenten (6) und Dübelschaft eine außen verlaufende Ringnut (7) vorgesehen ist.

4. Spreizdübel nach einem der vorhergehenden Ansprüche, **dadurch gekennzeichnet,** daß in eine an der Innenfläche der Spreizsegmente (6) vorgesehenen Ausnehmung (15) oder Ringnut ein Gleitring eingesetzt ist.

5. Spreizdübel nach einem der vorhergehenden Ansprüche, **dadurch gekennzeichnet,** daß am Befestigungsteil ein Innen- (8) oder Außengewinde vorgesehen ist, das als Mittel zum Ansetzen eines ein entsprechendes Außen- oder Innengewinde aufweisenden Drehwerkzeugs und zum Befestigen einer Befestigüngsschraube dient.

**Claims**

1. Expansible plug, for anchoring in undercut drilled holes, having an expander member, connected to the shaft of the plug, on which expansible segments are arranged for expansion, the expansible segments being integral with the plug shaft and projecting in the direction of the expander member, and means for receiving a turning tool being arranged on the securing member remote from the expander member, characterised in that at least one securing element (11) projects from the end face of the expander member (2) resting at the base of the drilled hole, to secure against turning, and that the expander member is connected by way of a thread to the shaft of the plug.

2. Expansible plug according to claim 1, characterised in that the expander member is a threaded bolt (1) provided with an expander cone (2), the threaded portion (4) of which bolt engages an internal thread (5) in the plug shaft (3) through the annular space formed by the expansible segments (6).

3. Expansible plug according to claim 1 or claim 2, characterised in that at the transition between expansible segments (6) and plug shaft an external annular groove (7) is provided.

4. Expansible plug according to any one of the preceding claims, characterised in that a low-friction ring is located in a recess (15) or annular groove in the inner surface of the expansible segments (6).

5. Expansible plug according to any one of the preceding claims, characterised in that an internal (8) or external thread is provided on the securing member and serves as means for receiving a turning tool having a corresponding external or internal thread and for securing a securing screw.

**Revendications**

1. Cheville expansible pour ancrage dans des trous qui présentent une contre-dépouille, cette cheville comportant un corps dilateur qui est relié à la queue de la cheville et sur lequel des segments expansibles peuvent être écartés, ces segments étant façonnés sur cette queue et étant orientés vers ce corps, et des éléments destinés à monter un outil rotatif étant disposés sur la partie destinée à la fixation, opposée audit corps, cheville caractérisée en ce qu'au moins un élément frein (11), destiné à empêcher le corps dilateur (2) de tourner, fait saillie de l'extrémité antérieure de ce corps qui s'appuie contre le fond du trou et en ce que ce corps est relié par vissage à la queue de la cheville.

2. Cheville expansible selon la revendication 1, caractérisée en ce que le corps dilateur est une broche filetée (1), qui comporte un cône dilateur (2) et dont la partie filetée (4) passe dans l'interface annulaire délimité par les segments expansibles (6) et est vissée dans un taraudage (5) de la queue (3) de la cheville.

3. Cheville expansible selon l'une des revendications 1 ou 2, caractérisée en ce qu'une gorge annulaire (7) extérieure est formée au raccordement entre les segments expansibles (6) et la queue de la cheville.

4. Cheville expansible selon l'une des revendications précédentes, caractérisée en ce qu'une bague antifriction est disposée dans un chambrage (15) ou une gorge annulaire de la surface intérieure des segments expansibles (6).

5. Cheville expansible selon l'une des revendications précédentes, caractérisée en ce qu'un filetage intérieur (8) ou extérieur de la partie servant à la fixation sert d'élément de liaison avec un outil rotatif, qui comporte un filetage extérieur ou intérieur complémentaire, et sert à bloquer une vis de fixation.

# Fig.1

# Fig.3

# Fig.2